# EUROPÄISCHE PATENTSCHRIFT

(11) **EP 1 135 657 B1**
(45) Veröffentlichungstag und Bekanntmachung des Hinweises auf die Patenterteilung: **21.07.2004**
(21) Anmeldenummer: 00974323.8
(22) Anmeldetag: 14.09.2000
(51) Int. Cl.: F24H 1/00

(54) **GASBETRIEBENE GENERATOR-THERME**
GAS POWERED THERMAL GENERATOR
CHAUFFE-EAU GENERATEUR A GAZ

(30) Priorität: 06.10.1999 DE 19948027
(43) Veröffentlichungstag der Anmeldung: 26.09.2001
(73) Patentinhaber: ROBERT BOSCH GMBH, 70442 Stuttgart (DE)
(72) Erfinder: KIRNER, Matthias, 70839 Gerlingen (DE)
(86) Internationale Anmeldenummer: PCT/DE2000/003204
(87) Internationale Veröffentlichungsnummer: WO 2001/025696

(56) Entgegenhaltungen:
- EP-A- 0 445 510
- US-A- 3 759 244
- US-A- 4 843 273
- US-A- 4 873 826

## Beschreibung

Die Erfindung betrifft eine gasbetriebene Generator-Therme mit einem thermisch-elektrischen Energie-Wandler in einem Thermengehäuse, in das Verbrennungsluft aus der Umgebung einleitbar und ein Gas-Luftgemisch über ein Gebläse mit nachgeschalteter Mischeinrichtung einem Brenner zuführbar ist, wobei das Gebläse Verbrennungsluft aus dem Thermengehäuse ansaugt und das Gas der Mischeinrichtung zuführbar ist, bei der vom Brenner erzeugte Wärme auf den thermisch-elektrischen Energie-Wandler zur Umwandlung in elektrische Energie übertragbar ist und der zu kühlende Teil des thermisch-elektrischen Energie-Wandlers zusätzlich gekühlt ist.

Bei den bekannten Generator-Thermen dieser Art erzeugt der thermisch-elektrische Energie-Wandler Strom. Die Energieumwandlung ist verlustbehaftet. Die entstehende Abwärme muss an der Außenseite des thermisch-elektrischen Energie-Wandlers abgeführt werden, um diesen vor Überhitzung zu schützen. Bevorzugte thermisch-elektrische Energie-Wandler sind resonante Arbeitsmaschinen, die mit Lineargeneratoren gekoppelt sind. Diese Lineargeneratoren sind von einer wasserdurchflossenen Kühlschlange umgeben und werden dadurch gekühlt.

Derartige Lösungen mit Wasserkühlung sind nicht nur fertigungstechnisch aufwendig, sie schränken auch die Systemauslegung ein. Zudem ist die Wasserkühlung mit erheblichen Kosten und technischen Risiken verbunden, wobei nur auf die Abdichtung hingewiesen wird. Außerdem ist die Zugänglichkeit zum Wandler bei Wartung oder Reparatur schwierig.

Es ist Aufgabe der Erfindung, eine gasbetriebene Generator-Therme der eingangs erwähnten Art im Aufbau so zu vereinfachen, dass diese ohne Wasserkühlung des Wandlers auskommt und so die Kosten und Risiken dieser ausschließt.

Diese Aufgabe wird nach der Erfindung dadurch gelöst, dass der zu kühlende Teil des thermisch-elektrischen Energie-Wandlers von einem topfartigen Kühlbehälter umschlossen ist, dem im Bodenbereich die Verbrennungsluft aus der Umgebung zuführbar ist, und dass die von diesem Teil erwärmte Verbrennungsluft über die offene Oberseite des Kühlbehälters in das Thermengehäuse strömt.

Bei diesem Aufbau der Therme wird die dem Thermengehäuse aus der Umgebung zugeführte Verbrennungsluft in geschickter Weise vor dem Einströmen in das Thermengehäuse und Ansaugen durch das Gebläse zur Kühlung des thermisch-elektrischen Energie-Wandlers verwendet. Da das Gebläse die Verbrennungsluft aus dem Thermengehäuse ansaugt, entsteht in diesem ein geringer Unterdruck, der für das Zuströmen der Umgebungsluft über den Kühlbehälter in das Thermengehäuse ausreicht. Die angesaugte Umgebungsluft tritt mit Umgebungstemperatur in den Kühlbehälter im Bodenbereich ein, umströmt das zu kühlende Teil des thermisch-elektrischen Energie-Wandlers und tritt erwärmt über die offene Oberseite des Kühlbehälters in das Thermengehäuse aus. Durch den vorwiegend konvektiven Wärmeübergang entsteht eine freie Strömung, die die erzwungene Strömung unterstützt. Das Gebläse führt dem Brenner daher erwärmte Verbrennungsluft zu. Die Abwärme des Wandlers wird so genutzt und verbleibt im System. Das Gebläse erzeugt einen Druck im Thermengehäuse, der unter dem Druck der Umgebungsluft liegt. Der Druck im Kühlbehälter liegt unter dem Druck der Umgebungsluft, jedoch über dem Druck im Thermengehäuse, so dass eine Luftströmung von der Umgebung in den Kühlbehälter und von dort in das Thermengehäuse entsteht.

Der Kühlbehälter hat nur die Funktion einer Strömungsführung und kann daher dünnwandig, grob toleriert und aus billigem Werkstoff kostengünstig hergestellt werden. Die Anforderungen an die Druckdichtheit des Kühlbehälters sind gering, da die Druckunterschiede zwischen der Innen- und der Außenseite desselben ebenfalls gering sind. Kabeleinführungen und dgl. in den Kühlbehälter sind nicht erforderlich und das Austreten der erwärmten Verbrennungsluft in das Thermengehäuse ist völlig unkritisch.

Die Zufuhr der angesaugten Umgebungsluft in den Kühlbehälter erfolgt in dessen Bodenbereich. Dabei kann vorgesehen sein, dass die Verbrennungsluft im Bodenbereich des Kühlbehälters axial zuführbar ist oder dass die Verbrennungsluft über dem Boden des Kühlbehälters tangential zuführbar ist, um die angesaugte Umgebungsluft im Kühlbehälter gleichmäßig zu verteilen.

Nach einer Ausgestaltung ist die gasbetriebene Generator-Therme so ausgeführt, dass das Verbrennungsgas des Brenners die Wärme an einen Stirlingmotor des thermisch-elektrischen Energie-Wandlers überträgt und dass das zu kühlende Teil im Kühlbehälter als Lineargenerator ausgebildet ist.

Für die Bereitstellung von erwärmtem Brauchwasser ist weiterhin vorgesehen, dass zwischen Brenner und Abgasauslaß ein Wärmeübertrager eingeschleift ist, über den erwärmtes Brauchwasser abnehmbar ist.

Ein Teil der Abwärme im Abgas läßt sich dadurch in dem System halten, dass die Zufuhr der Verbrennungsluft zumindest durch einen Teilbereich des Abgasauslasses führt, bevor sie in den Kühlbehälter einmündet.

Die Erfindung wird anhand von in der Zeichnung dargestellten Ausführungsbeispielen mit Stirlingmotor und Lineargenerator näher erläutert. Es zeigen:
- Fig. 1: eine gasbetriebene Generator-Therme mit axialer Zufuhr der angesaugten Verbrennungsluft in den Kühlbehälter und
- Fig. 2: eine gasbetriebene Generator-Therme mit tangentialer Zufuhr der angesaugten Verbrennungsluft in den Kühlbehälter.

In einem Thermengehäuse 10 ist ein thermisch-elektrischer Energie-Wandler aus Stirling-motor 16 und Lineargenerator 17 untergebracht. Dabei ist der Stirlingmotor 16 von einem ringförmigen Brenner 11 umschlossen, der diesen beheizt und antreibt. Gespeist wird dieser Brenner 11 mit einem Gas-Luft-Gemisch, das ein Gebläse 12 über eine Mischeinrichtung 13 zuführt. Das Gebläse 12 saugt die zum Gas-Luft-Gemisch erforderliche Verbrennungsluft 15 aus dem Thermengehäuse 10 an, während die Zufuhr 14 des Gases G zur Mischeinrichtung 13 erfolgt.

Über dem Brenner 11 ist ein Wärmeübertrager 18 angeordnet, der vom Verbrennungsgas aufgeheizt wird und zur Erwärmung von Brauchwaser dienen kann. Das Abgas AG tritt über einen Abgasauslaß 19 aus dem Thermengehäuse 10 aus und von dort in ein Abgassystem.

Aus der Umgebung der Generator-Therme wird Umgebungsluft als Verbrennungsluft L angesaugt, wobei die Zufuhr 21 zumindest durch einen Teil des Abgasauslasses 19 führt, um einen Teil der im Abgas AG enthaltenen Wärme zum Vorerwärmen der angesaugten Verbrennungsluft L zu verwenden. Der Ansaugvorgang wird dadurch ausgelöst, dass durch das Gebläse 12 im Thermengehäuse 10 ein Unterdruck erzeugt wird.

Die angesaugte Verbrennungsluft L wird nicht direkt in das Thermengehäuse 10 eingeleitet, sondern über einen topfartigen Kühlbehälter 20, der oben offen ist und den Lineargenerator 17 als zu kühlendes Teil umschließt und aufnimmt.

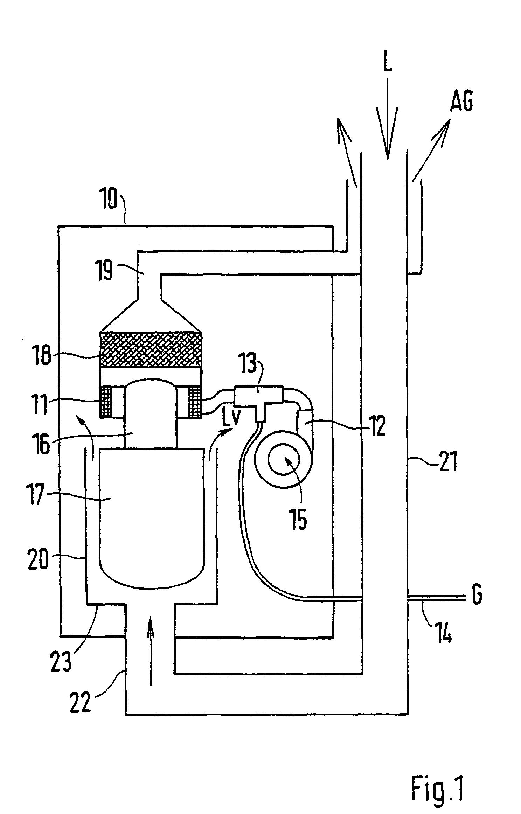

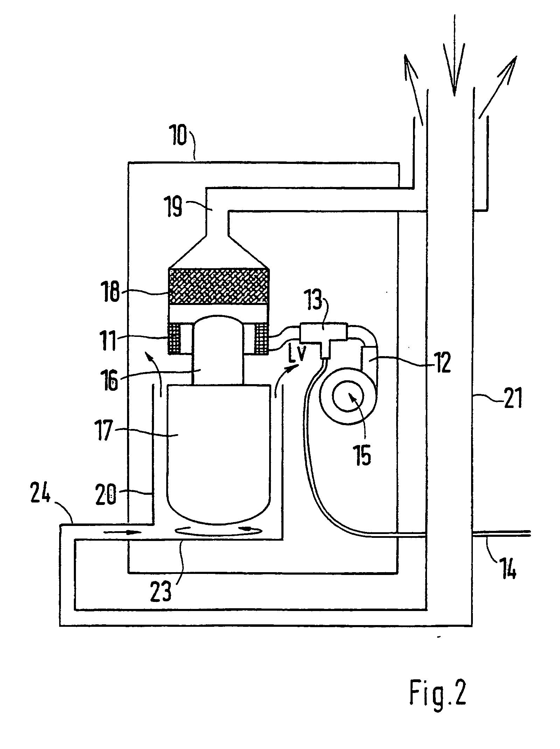

Die Zufuhr der angesaugten Verbrennungsluft L erfolgt im Zentrum des Bodens 23 axial in den Kühlbehälter 20, wie Fig. 1 zeigt, oder tangential über dem Boden 23, wie das Ausführungsbeispiel nach Fig. 2 erkennen läßt. In jedem Fall streicht die angesaugte Verbrennungsluft L über die Oberfläche des Lineargenerators 17 und kühlt diesen. Dabei wird die angesaugte Verbrennungsluft L aus der Umgebung über die offene Oberseite des Kühlbehälters 20 als erwärmte Verbrennungsluft Lv in das Thermengehäuse 10 geleitet. Aufgrund der Druckverhältnisse in der Umgebung und im Thermengehäuse 10 entsteht dabei eine Luftströmung im Kühlbehälter 20.

Wie die beiden Ausführungsbeispiele erkennen lassen, ist für die Kühlung des Lineargenerators 17 nur der einfache, aus billigem Werkstoff herstellbare Kühlbehälter 20 notwendig, an den in Bezug auf Toleranz und Dichtigkeit keine hohen Anforderungen zu stellen sind.

Es bleibt zu erwähnen, dass die Erfindung nicht auf die gezeigten Ausführungsbeispiele mit dem beschriebenen thermisch-elektrischen Energie-Wandler beschränkt ist. Auch für anders aufgebaute thermisch-elektrische Energie-Wandler kann die erfindungsgemäße Luftkühlung mit Kühlbehälter angewandt werden.

## Patentansprüche

1. Gasbetriebene Therme mit einem thermisch-elektrischen Energie-Wandler in einem Thermengehäuse, in das Verbrennungsluft aus der Umgebung einleitbar und ein Gas-Luftgemisch über ein Gebläse mit nachgeschalteter Mischeinrichtung einem Brenner zuführbar ist, wobei das Gebläse Verbrennungsluft aus dem Thermengehäuse ansaugt und das Gas der Mischeinrichtung zuführbar ist, bei der vom Brenner erzeugte Wärme auf den thermisch-elektrischen Energie-Wandler zur Umwandlung in elektrische Energie übertragbar ist und der zu kühlende Teil des thermisch-elektrischen Energie-Wandlers zusätzlich gekühlt ist,
**dadurch gekennzeichnet,**
**dass** der zu kühlende Teil (17) des thermisch-elektrischen Energie-Wandlers von einem topfartigen Kühlbehälter (20) umschlossen ist, dem im Bodenbereich die Verbrennungsluft (L) aus der Umgebung zuführbar ist, und
**dass** die von diesem Teil (17) erwärmte Verbrennungsluft (Lv) über die offene Oberseite des Kühlbehälters (20) in das Thermengehäuse (10) strömt.

2. Gasbetriebene Therme nach Anspruch 1,
**dadurch gekennzeichnet,**
**dass** die Verbrennungsluft (L) im Bodenbereich des Kühlbehälters (20) axial zuführbar ist.

3. Gasbetriebene Therme nach Anspruch 1,
**dadurch gekennzeichnet,**
**dass** die Verbrennungsluft (L) über dem Boden des Kühlbehälters (20) tangential zuführbar ist.

4. Gasbetriebene Therme nach einem der Ansprüche 1 bis 3,
**dadurch gekennzeichnet,**
**dass** das Verbrennungsgas des Brenners (11) die Wärme an einen Stirlingmotor des thermisch-elektrischen Energie-Wandlers überträgt und
**dass** das zu kühlende Teil (17) im Kühlbehälter (20) als Lineargenerator ausgebildet ist.

5. Gasbetriebene Therme nach einem der Ansprüche 1 bis 4,
**dadurch gekennzeichnet,**
**dass** zwischen Brenner (11) und Abgasauslaß (19) ein Wärmeübertrager (18) eingeschleift ist, über den erwärmtes Brauchwasser abnehmbar ist.

6. Gasbetriebene Therme nach einem der Ansprüche 1 bis 5,
**dadurch gekennzeichnet,**
**dass** die Zufuhr (21) der Verbrennungsluft (L) zumindest durch einen Teilbereich des Abgasauslasses (19) führt, bevor sie in den Kühlbehälter (20) einmündet (22 bzw. 24).

## Claims

1. Gas-powered boiler, with a thermoelectric energy converter in a boiler housing, into which combustion air can be introduced from the surroundings and in which a gas/air mixture can be supplied to a burner via a blower having a following mixing device, the blower sucking in combustion air from the boiler housing, and the gas being capable of being supplied to the mixing device in which heat generated by the burner can be transmitted to the thermoelectric energy converter for conversion into electrical energy and that part of the thermoelectric energy converter which is to be cooled is additionally cooled, **characterized in that** that part (17) of the thermoelectric energy converter which is to be cooled is surrounded by a pot-like cooling container (20), to which the combustion air (L) can be supplied in a bottom region from the surroundings, and **in that** the combustion air (Lv) heated by this part (17) flows via the open top side of the cooling container (20) into the boiler housing (10).

2. Gas-powered boiler according to Claim 1, **characterized in that** the combustion air (L) can be supplied axially in the bottom region of the cooling container (20).

3. Gas-powered boiler according to Claim 1, **characterized in that** the combustion air (L) can be supplied tangentially via the bottom of the cooling container (20).

4. Gas-powered boiler according to one of Claims 1 to 3, **characterized in that** the combustion gas of the burner (11) transmits the heat to a Stirling engine of the thermoelectric energy converter, and **in that** the part (17) to be cooled in the cooling container (20) is designed as a linear generator.

5. Gas-powered boiler according to one of Claims 1 to 4, **characterized in that** a heat exchanger (18), via which heated service water can be taken off, is inserted between the burner (11) and the exhaust-gas outlet (19).

6. Gas-powered boiler according to one of Claims 1 to 5, **characterized in that** the supply (21) of the combustion air (L) leads at least through a part-region of the exhaust-gas outlet (19), before it issues (22 or 24) into the cooling container (20).

## Revendications

1. Chauffe-eau à gaz comportant un convertisseur d'énergie thermique-électrique dans un caisson de chauffe-eau, dans lequel de l'air de combustion peut être introduit à partir de l'extérieur et un mélange gaz-air peut être conduit vers un brûleur par le biais d'un ventilateur muni en aval d'un dispositif de mélange, le ventilateur aspirant de l'air de combustion à partir du caisson de chauffe-eau et le gaz étant conduit vers le dispositif de mélange, dans lequel la chaleur générée par le brûleur peut être transmise au convertisseur d'énergie thermique-électrique pour être convertie en énergie électrique, et la partie à refroidir du convertisseur d'énergie thermique-électrique est en outre refroidie,
**caractérisé en ce que**
la partie à refroidir (17) du convertisseur d'énergie thermique-électrique est entourée par un réservoir de refroidissement en forme de pot (20), vers lequel, dans la zone de fond, est conduit l'air de combustion (L) provenant de l'extérieur, et l'air de combustion (Lv) chauffé par cette partie (17) s'écoule par le côté supérieur ouvert du réservoir de refroidissement (20) dans le caisson de chauffe-eau (10).

2. Chauffe-eau à gaz selon la revendication 1,
**caractérisé en ce que**
l'air de combustion (L) peut être amené de façon axiale dans la zone de fond du réservoir de refroidissement (20).

3. Chauffe-eau à gaz selon la revendication 1,
**caractérisé en ce que**
l'air de combustion (L) peut être amené de façon tangentielle dans le fond du réservoir de refroidissement (20).

4. Chauffe-eau à gaz selon l'une des revendications 1 à 3,
**caractérisé en ce que**
le gaz de combustion du brûleur (11) transmet la chaleur vers un moteur Stirling du convertisseur d'énergie thermique-électrique, et la partie à refroidir (17) dans le réservoir de refroidissement (20) est configurée sous forme de générateur linéaire.

5. Chauffe-eau à gaz selon l'une des revendications 1 à 4,
**caractérisé en ce qu'**
un échangeur de chaleur (18), permettant de prélever de l'eau de consommation chauffée, est inséré entre le brûleur (11) et la sortie des gaz d'échappement (19).

6. Chauffe-eau à gaz selon l'une des revendications 1 à 5,
**caractérisé en ce que**
l'arrivée (21) de l'air de combustion (L) conduit au moins à travers une zone partielle de la sortie des gaz d'échappement (19), avant de déboucher (22 ou 24) dans le réservoir de refroidissement (20).
